# EUROPÄISCHE PATENTSCHRIFT

(11) **EP 2 048 331 B1**
(45) Veröffentlichungstag und Bekanntmachung des Hinweises auf die Patenterteilung: **17.07.2013**
(21) Anmeldenummer: 08017518.5
(22) Anmeldetag: 07.10.2008
(51) Int. Cl.: F01L 1/02, F01L 1/047, F01L 1/053, F01L 1/34, F02D 13/02

(54) **Brennkraftmaschine mit gemischten Nockenwellen**
Combustion engine with mixed camshafts
Moteur à combustion interne doté d'arbres à came mixtes

(30) Priorität: 12.10.2007 DE 102007049109
(43) Veröffentlichungstag der Anmeldung: 15.04.2009
(73) Patentinhaber: Volkswagen Aktiengesellschaft, 38440 Wolfsburg (DE)
(72) Erfinder: Grönendijk, Axel, 38518 Gifhorn (DE); Cornelius, Volker, 38162 Cremlingen (DE)

(56) Entgegenhaltungen:
- EP-A1- 1 242 720
- WO-A1-02/29214
- WO-A1-2006/014098

## Beschreibung

Die Erfindung betrifft eine Brennkraftmaschine, insbesondere Dieselmotor, insbesondere eines Kraftfahrzeugs, mit wenigstens einem Arbeitszylinder, wobei jedem Arbeitszylinder wenigstens ein erstes Einlassventil und wenigstens ein zweites Einlassventil sowie wenigstens ein erstes Auslassventil und wenigstens ein zweites Auslassventil zugeordnet sind, wobei eine erste Nockenwellen vorgesehen ist, welche die ersten Einlassventile und die ersten Auslassventile eines jeden Arbeitszylinders betätigt, wobei eine zweite Nockenwelle vorgesehen ist, welche die zweiten Einlassventile und die zweiten Auslassventile eines jeden Arbeitszylinders betätigt, wobei an der zweiten Nockenwelle ein Versteller angeordnet ist, welcher Ventilsteuerzeiten der dieser zweiten Nockenwelle zugeordneten Ein- und Auslassventile gegenüber den Ventilsteuerzeiten der ersten Nockenwelle wahlweise nach früh oder spät verstellt, wobei jeder Nocken an seiner Umfangskontur eine Haupterhebung derart aufweist, dass das diesem Nocken zugeordnete Gaswechselventil einen Haupthub ausführt, gemäß dem Oberbegriff des Patentanspruchs 1.

Aus der DE 10 2005 031 241 A1 ist eine Kolben-Brennkraftmaschine eines Kraftfahrzeuges mit einer Steuerung zur zyklussynchronen und zylinderselektiven Umschaltung von Fremdzündung in eine kontrollierte Selbstzündung und umgekehrt bekannt, wobei eine Ventilgruppe eines Zylinders mehrere Ein- und Auslassventile aufweist und eine Öffnungsdauer der Ventilgruppe auf Ein- und Auslassventile verschieden aufgeteilt ist.

Aus der DE 103 37 430 A1 ist eine Kolbenbrennkraftrnaschine mit Schaltnocken bekannt, wobei Gaseinlassventile und Gasauslassventile vorgesehen sind, die über zumindest eine Nockenwelle betätigt werden. Die Nockenwelle weist zumindest einen Nocken als Steuerkontur auf. Der Nocken hat eine Grundkreiskontur mit einer, die Grundkreiskontur radial überragenden Nockenkontur. Ein Konturkörper mit einer Zusatznockenstruktur weist eine Ruhestellung auf, die gleichzeitig seine Aktivstellung ist, wobei der Konturkörper in seiner Ruhestellung permanent nachgiebig gelagert über die Grundkreiskontur hinausragt und bei einem Überfahren mit einem Kraftübertragungsglied radial in seine Grundkreiskontur eingedrückt wird und in seiner Aktivstellung die permanente Nachgiebigkeit blockiert ist. Vorzugsweise wird der Konturkörper radial vollständig eingedrückt. Das Kraftübertragungsglied ist beispielsweise eine Rolle, die an einem Ventiltrieb aufgehängt ist. Der Konturkörper ermöglicht in seiner Aktivstellung eine innere Abgasrückführung. Vorzugsweise wird diese über eine Motorsteuerung geregelt, die für eine entsprechende Aktivierung Mess- und Betriebsdaten nicht nur von der Brennkraftmaschine, sondern auch von der Abgasanlage erhält und auswertet.

Das Dokument EP 1 242 720 A1 betrifft eine Viertaktbrennkraftmaschine mit zwei Nockenwellen, wobei mindestens eine Nockenwelle von einem Phasenversteller hinsichtlich der Phasenlage in Bezug auf eine Kurbelwelle verstellt wird. Alle Einlassventile werden von einer Nockenwelle betätigt, so dass sich eine Veränderung der Phasenlage dieser Nockenwelle relativ zur Kurbelwelle auf alle Einlassventile in gleicher Weise überträgt.

Im Dokument WO 2006/014098 A1 ist ein Gaswechselventilmechanismus einer Brennkraftmaschine mit zwei Nockenwellen offenbart, die beide von einem Zentrifugalkraftregulator in Abhängigkeit von der Drehzahl der Brennkraftmaschine verstellt werden.

Das Dokument WO 02/29214 A1 betrifft eine Steuerung für Gaswechselventile einer Brennkraftmaschine mit zwei Nockenwellen. Eine der beiden Nockenwellen wird von einem Phasensteller relativ zur anderen Nockenwelle verstellt.

Der Erfindung liegt die Aufgabe zugrunde, eine Brennkraftmaschine der o.g. Art hinsichtlich der Steuerung von Gaswechselventilen zu verbessern.

Diese Aufgabe wird erfindungsgemäß durch eine Brennkraftmaschine der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einer Brennkraftmaschine der o.g. Art erfindungsgemäß vorgesehen, dass wenigstens ein Nocken der ersten oder zweiten Nockenwelle derart ausgebildet ist, dass der Verlauf des Haupthubes über den Kurbelwinkel des diesem Nocken zugeordneten Gaswechselventils wahlweise oder dauerhaft in seiner Amplitude und/oder zeitlichen Länge in Bezug auf den Kurbelwinkel verändert ist.

Dies hat den Vorteil, dass mit nur einem Phasensteller in Kombination mit neuartiger gemischter Nockenanordnung die temporäre Darstellung des Miller-Zyklus sowie der inneren Abgasrückführung möglich ist, wobei auf ein sonst notweniges Verstellsystem an einzelnen Nocken verzichtet werden kann.

In einer bevorzugten Ausführungsform weist wenigstens ein Nocken der zweiten Nockenwelle wenigstens eine zusätzliche Erhebung auf, welche derart angeordnet und ausgebildet ist, dass das diesem Nocken zugeordnete Gaswechselventil neben dem Haupthub einen zusätzlichen Hub vor dem Beginn und/oder am oder nach dem Ende des Haupthubes ausführt, wobei der zusätzliche Hub kleiner ist als der Haupthub.

Eine einfache Darstellung eines Miller-Zyklus sowie einer internen Abgasrückführung über eine Variabilität des Einlassventiles erzielt man dadurch, dass bei wenigstens einem Nocken der zweiten Nockenwelle, welcher ein zweites Einlassventil betätigt, die zusätzliche Erhebung derart angeordnet und ausgebildet ist, dass dieses zweite Einlassventil vor dem Beginn des Haupthubes den zusätzlichen Hub ausführt.

Der zusätzliche Hub beträgt beispielsweise 0,5 mm bis 2 mm.

Eine einfache Darstellung eines Miller-Zyklus sowie einer internen Abgasrückführung über eine Variabilität des Auslassventils erzielt man dadurch, dass bei wenigstens einem Nocken der zweiten Nockenwelle, welcher ein zweites Auslassventil betätigt, die zusätzliche Erhebung derart angeordnet und ausgebildet ist, dass dieses zweite Auslassventil am Ende des Haupthubes den zusätzlichen Hub ausführt, welcher sich bezogen auf den Kurbelwinkel über das Ende das Haupthubes hinaus erstreckt.

Zweckmäßigerweise erstreckt sich der'zusätzlichen Hub bezogen auf den Kurbelwinkel über den Anfang des Haupthubes des zweiten Einlassventiles hinaus.

Der zusätzliche Hub beträgt beispielsweise 0,5 mm bis 2 mm.

Eine einfache Darstellung eines Miller-Zyklus sowie einer internen Abgasrückführung über eine Variabilität des Auslassventils erzielt man dadurch, dass wenigstens ein Nocken der ersten Nockenwelle, welcher ein erstes Auslassventil eines Arbeitszylinders betätigt, derart ausgebildet ist, dass dieser Nocken wahlweise das erste Auslassventil mit dem Haupthub betätigt; den Haupthub dieses ersten Auslassventiles auf null absenkt oder der Verlauf des Haupthubes bezogen auf den Kurbelwinkel in Amplitude und Phase identisch ist mit dem Haupthub des zweiten Auslassventils dieses Arbeitszylinders.

In einer bevorzugten Ausführungsform weist der wenigstens eine Nocken der ersten Nockenwelle, welcher ein erstes Auslassventil eines Arbeitszylinders betätigt, zwei Nockenkonturen auf, wobei eine Nockenkontur derjenigen der Nocken der zweiten Nockenwelle für die zweiten Auslassventile entspricht.

Zweckmäßigerweise ist eine Einrichtung zum Umschalten zwischen den zwei Nockenkonturen vorgesehen.

Die Erfindung wird im Folgenden anhand der Zeichnung näher erläutert. Diese zeigt in
- Fig. 1: eine bevorzugte Ausführungsform einer erfindungsgemäßen Brennkraftmaschine in schematischer Ansicht;
- Fig. 2: eine schematische Darstellung der Nockenwellenanordnung bei der erfindungsgemäßen Brennkraftmaschine gemäß Fig. 1,
- Fig. 3: eine graphische Darstellung der Ventilbewegung von Einlass- und Auslassventilen der verschiedenen Nockenwellen und der Kolbenbewegung bei einem Verstellwinkel von 0°KW,
- Fig. 4: eine graphische Darstellung der Ventilbewegung von Einlass- und Auslassventilen der verschiedenen Nockenwellen und der Kolbenbewegung bei maximaler Verstellung in Richtung früh,
- Fig. 5: eine graphische Darstellung der Ventilbewegung von Einlass- und Auslassventilen der verschiedenen Nockenwellen und der Kolbenbewegung bei maximaler Verstellung in Richtung spät,
- Fig. 6: eine graphische Darstellung der Ventilbewegung von Einlass- und Auslassventilen der verschiedenen Nockenwellen und der Kolbenbewegung bei maximaler Verstellung in Richtung spät für eine erste bevorzugte Ausführungsform der erfindungsgemäßen Brennkraftmaschine,
- Fig. 7: eine graphische Darstellung der Ventilbewegung von Einlass- und Auslassventilen der verschiedenen Nockenwellen und der Kolbenbewegung bei maximaler Verstellung in Richtung früh für die erste bevorzugte Ausführungsform der erfindungsgemäßen Brennkraftmaschine,
- Fig. 8: eine graphische Darstellung eines Motorkennfeldes,
- Fig. 9: eine graphische Darstellung der Ventilbewegung von Einlass- und Auslassventilen der verschiedenen Nockenwellen und der Kolbenbewegung bei maximaler Verstellung in Richtung spät für eine zweite bevorzugte Ausführungsform der erfindungsgemäßen Brennkraftmaschine,
- Fig. 10: eine graphische Darstellung der Ventilbewegung von Einlass- und Auslassventilen der verschiedenen Nockenwellen und der Kolbenbewegung bei maximaler Verstellung in Richtung früh für die zweite bevorzugte Ausführungsform der erfindungsgemäßen Brennkraftmaschine und
- Fig. 11: eine graphische Darstellung der Ventilbewegung von Einlass- und Auslassventilen der verschiedenen Nockenwellen und der Kolbenbewegung bei einem Verstellwinkel von 0°KW für eine dritte bevorzugte Ausführungsform der erfindungsgemäßen Brennkraftmaschine.

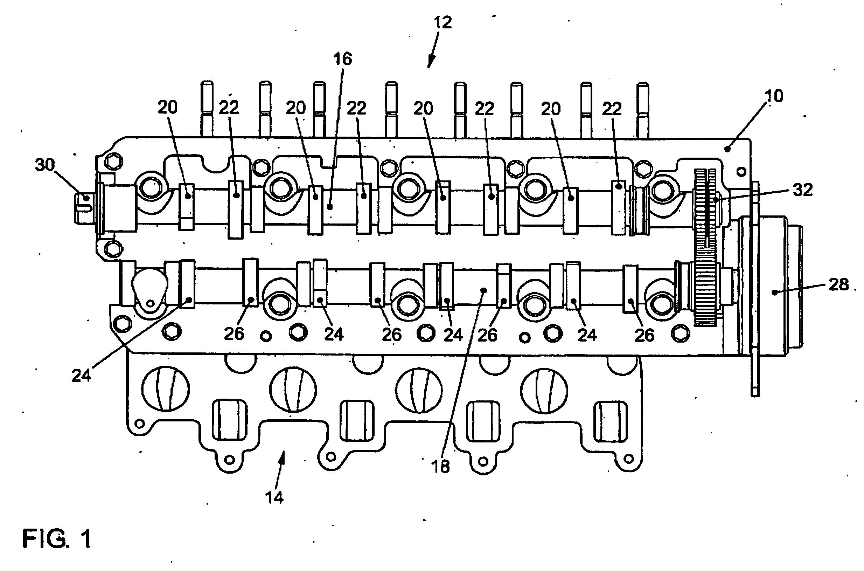

Die in Fig. 1 dargestellte, bevorzugte Ausführungsform einer erfindungemäßen Brennkraftmaschine umfasst einen Zylinderkopf 10, in dem nicht näher dargestellte Arbeitszylinder angeordnet sind, in denen sich jeweils ein Hubkolben (nicht dargestellt) oszillierend bewegt. Der Zylinderkopf 10 weist eine Auslassseite 12 auf, an der Abgase aus den Arbeitszylindern abgeführt werden, und eine Einlassseite 14 auf, an der den Arbeitszylindern Frischgas zugeführt wird.

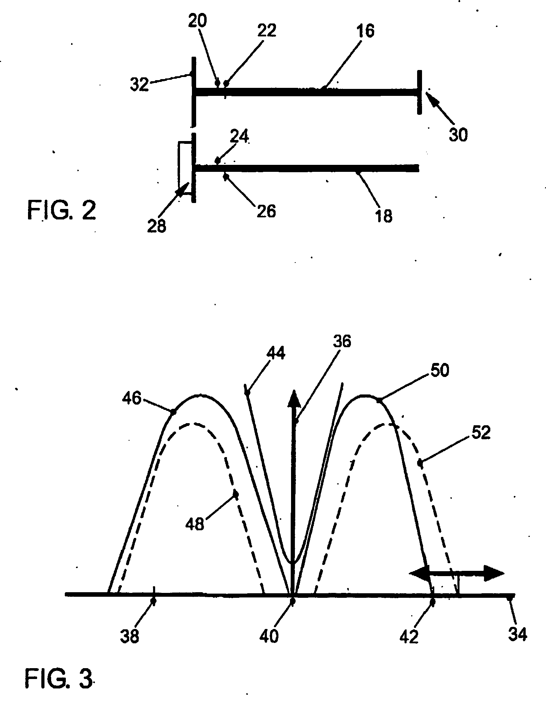

Jedem Arbeitszylinder sind zwei Einlassventile (nicht dargestellt) und zwei Auslassventile (nicht dargestellt) zugeordnet, wobei eine erste Nockenwelle 16 und eine zweite Nockenwelle 18 vorgesehen sind. Die erste Nockwelle 16 trägt erste Einlassnocken 20, die jeweils ein erstes Einlassventil betätigen, und erste Auslassnocken 22, die jeweils ein erstes Auslassventil betätigen. Ebenso trägt die zweite Nockenwelle 18 zweite Einlassnocken 24, die jeweils ein zweites Einlassventil betätigen, und zweite Auslassnocken 26, die jeweils ein zweites Auslassventil betätigen. Auf beiden Nockenwellen 16, 18 wechseln sich in Längsrichtung gesehen jeweils erste und zweite Einlassnocken 20, 24 sowie erste und zweite Auslassnocken 22, 26 ab. Auf diese Weise werden die beiden Einlassventile und Auslassventile eines jeden Arbeitszylinders von verschiedenen Nockenwellen 16, 18 betätigt. Wie insbesondere zusätzlich aus Fig. 2 hervorgeht, ist somit jede der Nockenwellen 12, 14 eine so genannte gemischte Nockenwellen, d.h. jede Nockenwelle 12, 14 betätigt sowohl Einlass- als auch Auslassventile über entsprechende Einlassnocken 20, 24 bzw. Auslassnocken 22, 26.

Die Steuerzeiten der ersten Nockenwelle 16 für die dieser zugeordneten Einlass- und Auslassventile sind unveränderbar festgelegt. An der zweiten Nockenwelle 18 ist ein Versteller 28 angeordnet, welcher die Steuerzeiten der dieser zugeordneten Einlass- und Auslassventile gegenüber den Steuerzeiten der ersten Nockenwelle 16 verändert, indem die zweite Nockenwelle 18 durch den Versteller 28 relativ zur ersten Nockenwelle 16 verdreht wird. Die erste Nockenwelle 16 ist diejenige Nockenwelle, die bei 30 von einer nicht dargestellten Kurbelwelle der Brennkraftmaschine angetrieben wird. Die erste Nockenwelle 16 treibt dann ihrerseits über Zahnräder 32 die zweite Nockenwelle 18 an.

In den Fig. 3 bis 5 ist auf einer horizontalen Achse 34 ein Kurbelwinkel und auf einer vertikalen Achse 36 eine Hubbewegung aufgetragen. Auf der horizontalen Achse 34 ist bei 38 ein unterer Totpunkt (UT) des Hubkolbens nach dem Arbeitshub und vor dem Ladungswechsel, bei 40 ist ein oberer Totpunkt (OT) des Hubkolbens während des Ladungswechsels und bei 42 ist ein unterer Totpunkt (UT) des Hubkolbens nach dem Ladungswechsel und vor dem Kompressionshub aufgetragen. Ein erster Graph 44 veranschaulicht die Hubbewegung 36 über den Kurbelwinkel 34 für den Kolben, ein zweiter Graph 46 veranschaulicht die Hubbewegung 36 über den Kurbelwinkel 34 für diejenigen ersten Auslassventile, die von den ersten Auslassnocken 22 der ersten Nockenwelle 16 gesteuert werden, ein dritter Graph 48 (gestrichelt) veranschaulicht die Hubbewegung 36 über den Kurbelwinkel 34 für diejenigen zweiten Auslassventile, die von den zweiten Auslassnocken 26 der zweiten Nockenwelle 18 gesteuert werden, ein vierter Graph 50 veranschaulicht die Hubbewegung 36 über den Kurbelwinkel 34 für diejenigen ersten Einlassventile, die von den ersten Einlassnocken 20 der ersten Nockenwelle 16 gesteuert werden und ein fünfter Graph 52 (gestrichelt) veranschaulicht die Hubbewegung 36 über den Kurbelwinkel 34 für diejenigen zweiten Einlassventile, die von den zweiten Einlassnocken 24 der zweiten Nockenwelle 18 gesteuert werden.

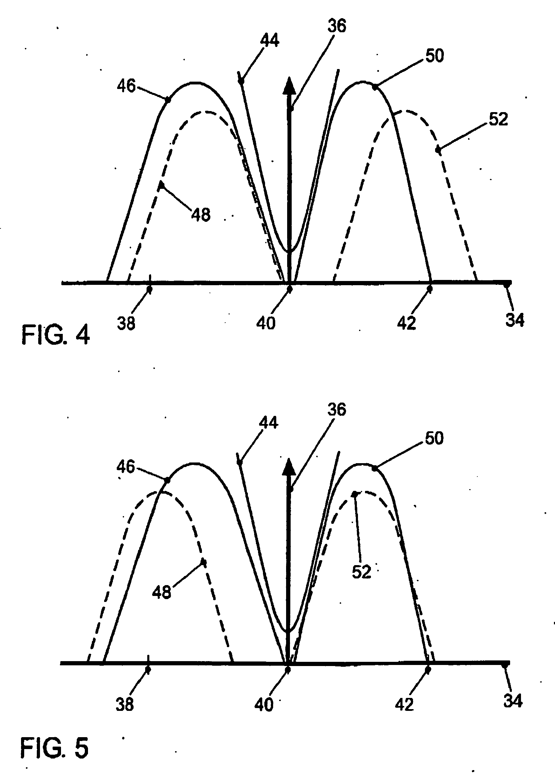

In Fig. 3 ist eine Stellung des Verstellers 28 mit 0°KW dargestellt, d.h. die Nockenwellen 16, 18 sind nicht gegeneinander verdreht. In Fig. 4 ist eine Stellung des Verstellers 28 bei maximaler Verstellung in Richtung spät und in Fig. 5 ist eine Stellung des Verstellers 28 bei maximaler Verstellung in Richtung früh dargestellt. Wie aus den Fig. 2 bis 5 unmittelbar ersichtlich, bleibt die Hubbewegung der ersten Gaswechselventile der ersten Kurbelwelle 16 (zweiter Graph 46 und vierter Graph 50) relativ zur Kurbelwelle unverändert, wohingegen die Hubbewegung der zweiten Gaswechselventile der zweiten Kurbelwelle 18 (dritter Graph 48 und fünfter Graph 52 jeweils gestrichelt) gemeinsam für die zugeordneten zweiten Einlassventile und zweiten Auslassventile verschoben werden. Hierdurch kann einerseits durch die verschobenen Öffnungszeiten zwischen den ersten Einlassventilen der ersten Kurbelwelle 16 (Einlassnocken 20; vierter Graph 50) und den zweiten Einlassventilen der zweiten Kurbelwelle 18 (Einlassnocken 24; fünfter Graph 52) ein Millereffekt simuliert werden (Fig. 3), wobei andererseits eine Kollision zwischen den Einlassventilen und dem Hubkolben verhindert ist.

Vorraussetzung für dieses simulierte Millern ist das Vorhandensein von mindestens zwei Einlassventilen pro Arbeitszylinder und zwei Auslassventilen pro Arbeitszylinder, wobei die Einlassventile eines jeden Arbeitszylinders von verschiedenen Kurbelwellen betätigt werden. Hierbei bedient die erste Nockenwelle 16 die Hälfte aller Ein- und Auslassventile mit konventionellen Steuerzeiten. Die zweite Nockenwelle 18 bedient die verbleibenden zweiten Ein- und Auslassventile und ist hinsichtlich der Nockenkontur für "Auslassventil schließt" und "Einlassventil öffnet" so ausgelegt, dass ein Verstellbereich dieser Nockenwelle 18 von ca. 60° KW +/-20° ohne Kolbenkollision stattfinden kann.

Der Millereffekt wird dadurch erzielt, dass das früheste "Einlassventil öffnet" der ersten Nockenwelle 16 und das späteste "Einlassventil schließt" der zweiten Nockenwelle 18 unterschiedlichen Ventilen für jeden Arbeitszylinder zugeordnet ist, vgl. Fig. 4.

Eine Anhebung der Verdichtungsendtemperatur ist dadurch möglich, dass bei "Einlassventil schließt" der festen erste Nockenwelle 16 (vierter Graph 50) im UT 42 die zweite Nockenwelle 18 (Millerwelle) ebenfalls in Richtung früh verschoben wird (fünfter Graph 52; vgl. Fig. 5). Gleichzeitig kann so eine Anhebung der Abgastemperatur (wichtig für Abgasnachbehandlung) durch ein Frühschieben des "Auslassventil öffnet" der Millerwelle 18 (dritter Graph 48) erfolgen, wie in Fig. 5 dargestellt. Dies kann ein schnelles Aufheizen eines Abgaskatalysators nach einem Kaltstart unterstützten.

Die erste Nockenwelle 16 hat ein ES bei ca. = UT 42, um das maximale Verdichtungsverhältnis bei Frühverstellung der zweiten Nockenwelle 18 zu erzielen. Alternativ zu der in Fig. 3 dargestellten Situation bei 0°-Verstellung des Verstellers 28 kann auch dies als 0° Position für die zweite Nockenwelle 18 betrachtet werden, so dass dann nur noch eine Spätverstellung erfolgt. Wichtig ist aber in jedem Fall, dass der erste Einlassnocken von der ersten Nockenwelle 16 im Vergleich zu beispielsweise bei Dieselmotoren üblichem ES bei ca. 10°-25°KW nach UT derart gekürzt ist, dass die UT Position ES durch beide Nocken erzielt werden kann.

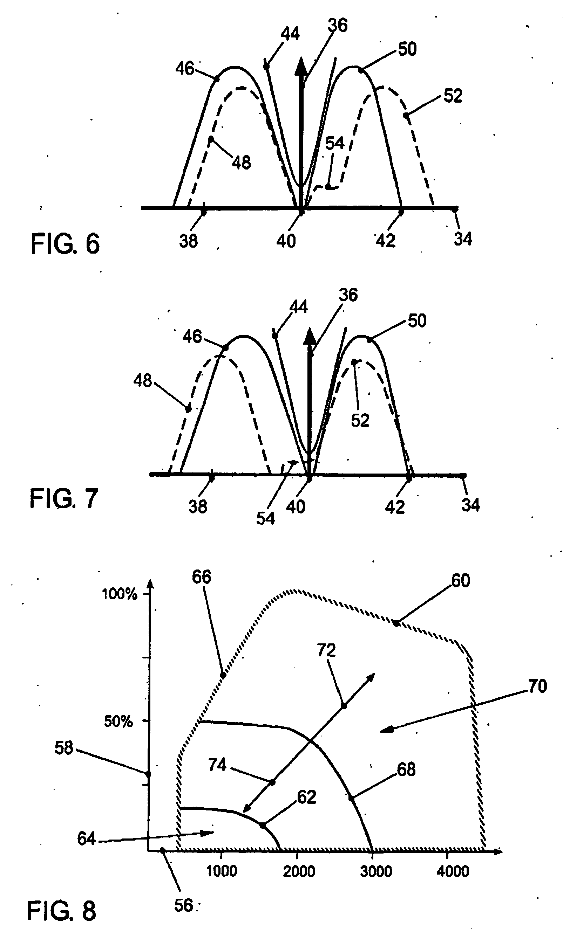

In einer ersten bevorzugten Ausführungsform der erfindungsgemäßen Brennkraftmaschine ist es vorgesehen, den zweiten Einlassnocken 24 auf der zweiten Nockenwelle um eine so genannte "Bootphase" zu ergänzen. Dies ist in Fig. 6 und 7 veranschaulicht, wobei Fig. 6 einen Zustand mit maximaler Verstellung nach spät und Fig. 7 einen Zustand mit maximaler Verstellung nach früh zeigt. Der Verlauf des Hubes 52 des zweiten Einlassventils ist um eine "Boot-Rampe" 54 ergänzt. Hierbei handelt es sich um eine vor Beginn des Einlasshubes vorgezogene Rampe 54 mit einer Hubhöhe von beispielsweise 0,5 mm bis 2 mm, also um eine Hubhöhe, die deutlich kleiner ist als der Haupthub des Hubverlaufes 52. Mechanisch ist dieser zusätzliche Hub 54 mittels einer zusätzlichen Erhöhung bzw. eines zusätzlichen Vorsprungs auf dem Umfang bzw. der Kontur des zweiten Einlassnockens realisiert, der eine Haupterhebung auf der Umfangskontur zum realisieren des Haupthubes 52 aufweist. Die zusätzlichen Erhöhung läuft dabei der Haupterhebung voraus.

Erfolgt bei dieser Konstellation eine Frühverstellung, wie in Fig. 7 dargestellt, so wird das über diesen zweiten Einlassnocken 24 betätigte Einlassventil bereits im Auslasstakt des Motors, d.h. vor OT 40, geöffnet. Dies führt zu einem Rückschieben des Abgases in den Einlasskanal, von wo es im nachfolgenden Einlasstakt zwischen OT 40 und UT 42 angesaugt wird. Um den notwendigen Kolbenfreigang sicherzustellen, ist hierbei im Kolben an der Position des variablen zweiten Einlassventils eine entsprechende Ventiltasche vorzusehen.

Ein zusätzlicher Vorteil dieser Ausführungsform liegt darin, dass durch die "Bootphase" 54 beispielsweise auch bei Spätverstellung (Fig. 6) bereits so früh wie möglich beide Einlassventile öffnen. Mit dieser ersten bevorzugten Ausführungsform sind also über nur einen Aktuator die folgenden brennverfahrensrelevanten Eigenschaften einstellbar:
1. Spätes Einlass schließt (ES) zur Verdichtungsabsenkung durch Spätverstellung.
2. Frühes Einlass schließt (ES) zur Verdichtungsanhebung durch Frühverstellung
3. Bei Punkt 2. mit sehr frühem ES (in der Nähe von OT 40) zusätzliche Anhebung der Prozesstemperatur durch die dann wirksame interne Abgasrückführung (EGR).
4. Frühes Auslass öffnet (AÖ) in Kombination mit 2. und 3. möglich.

Fig. 8 veranschaulicht ein Last-Drehzahlkennfeld 60 für eine Brennkraftmaschine gemäß der ersten bevorzugten Ausführungsform. Auf einer horizontalen Achse 56 ist eine Drehzahl in U/min und auf einer vertikalen Achse 58 ist eine Last in Prozent von der maximalen Last der Brennkraftmaschine aufgetragen. Das Kennfeld 60 wird durch eine erste Linie 62 in einen ersten Kennfeldbereich 64 und einen zweiten Kennfeldbereich 66 sowie durch eine zweite Linie 68 in den zweiten Kennfeldbereich 66 und einen dritten Kennfeldbereich 70 unterteilt.

Im dritten Kennfeldbereich 70, in dem bei Drehzahlen von kleiner als 3.000 U/min Lasten von größer 50% vorliegen sowie bei Drehzahlen über 3000 U/min Lasten von 0% bis 100% vorliegen, wird durch eine in Pfeilrichtung 72 zunehmende Spätverstellung der zweiten Nockenwelle 18 eine zunehmende Verdichtungsabsenkung realisiert. Durch das späte Schließen des zweiten Einlassventils nach UT 42 ist ein Miller-Atkinson-Zyklus realisiert. Das effektive Verdichtungsverhältnis ist gegenüber dem geometrischen Verdichtungsverhältnis kleiner. Dies führt zu einer entsprechenden Reduktion von Schadstoffemissionen.

Im zweiten Kennfeldbereich 66, in dem bei Drehzahlen von 1.800 U/min bis 3.000 U/min Lasten von kleiner 50% vorliegen sowie bei Drehzahlen von kleiner 1.800 U/min Lasten von 0% bis 50% vorliegen, wird durch eine in Pfeilrichtung 74 zunehmende Frühverstellung der zweiten Nockenwelle 18 eine zunehmende Verdichtungsanhebung realisiert. Auf der zweiten Linie befindet sich der Versteller 28 in einer Position, in der die Phasenverschiebung zwischen erster und zweiter Nockenwelle 16, 18 0°KW beträgt. Das Verdichtungsverhältnis entspricht zunehmend dem geometrischen Verdichtungsverhältnis der Arbeitszylinder. Auf der ersten Linie 62 ist die zweite Nockenwelle 18 maximal nach früh verstellt, so dass das beide Einlassventile 16, 18 bei UT 42 schließen. Auf dieser ersten Linie 62 entspricht das Verdichtungsverhältnis dem geometrischen Verdichtungsverhältnis der Arbeitszylinder.

Im ersten Kennfeldbereich 64, in dem eine Drehzahl von kleiner als 1.800 U/min und eine Last von kleiner 40% vorliegt, ist die zweite Nockenwelle 18 maximal nach früh verstellt und es erfolgt eine maximale innere Abgasrückführung (EGR). Das Verdichtungsverhältnis entspricht dem geometrischen Verdichtungsverhältnis der Arbeitszylinder.

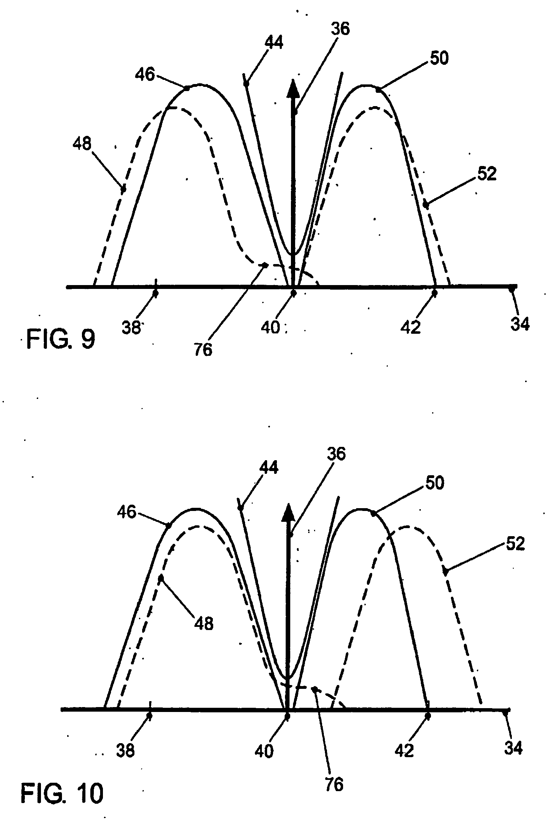

Die Fig. 9 und 10 veranschaulichen einen Hubverlauf der Ein- und Auslassventile für eine zweite bevorzugte Ausführungsform der erfindungsgemäßen Brennkraftmaschine. Im Gegensatz zur ersten Ausführungsform gemäß der Fig. 6 bis 8, bei der in einem unteren Lastbereich des Motorbetriebes durch geeignete Nockenform eine innere EGR über das zweite Einlassventil realisiert wurde, wird bei der zweiten bevorzugten Ausführungsform gemäß Fig. 9 und 10 eine zusätzliche interne Abgasrückführung (EGR) über das zweite Auslassventil realisiert. Hierzu ist auf der Kontur bzw. dem Umfang des zweiten Auslassnockens 26 auf der zweiten Nockenwelle 18 zusätzlich zur Haupterhebung, die den Haupthub 48 des zweiten Auslassventils realisiert, eine nachlaufende Rampe bzw. zusätzliche Erhöhung mit einer Hubhöhe von beispielsweise ca. 0,5 bis 2 mm vorgesehen. Dies realisiert die aus Fig. 9 und 10 ersichtliche nachlaufende Rampe bzw. einen zusätzlichen Hub 76 des Ventilhubverlaufes 48 des zweiten Auslassventiles. Fig. 9 zeigt den Zustand mit maximaler Frühverstellung und Fig. 10 zeigt den Zustand mit maximaler Spätverstellung der zweiten Nockenwelle 18.

Erfolgt bei dieser zweiten bevorzugten Ausführungsform eine Spätverstellung über das eigentliche Wuscheinlassschließt hinaus (Fig. 10), so bleibt das über diesen zweiten Auslassnocken 26 betätigte zweite Auslassventil im Einlasstakt des Motors nach OT 40 geöffnet. Dies führt zu einem Ansaugen eines Teils des zuvor ausgeschobenen Abgases parallel zur Frischluft im Ansaugtakt zwischen OT 40 und UT 42, bis das zweite Auslassventil am Ende des zusätzlichen Hubes 76 schließt. Um den notwendigen Kolbenfreigang sicherzustellen, ist hierbei im Kolben an der Position des variablen zweiten Auslassventils eine entsprechende Ventiltasche vorzusehen.

Mit dieser zweiten bevorzugten Ausführungsform sind also über nur einen Aktuator die folgenden brennverfahrensrelevanten Eigenschaften einstellbar:
1. Spätes Einlass schließt (ES) zur Verdichtungsabsenkung durch Spätverstellung.
2. Frühes Einlass schließt (ES) zur Verdichtungsanhebung durch Frühverstellung
3. Bei Punkt 1. mit sehr spätem ES zusätzliche Reduzierung der Füllung und des Luftverhältnisses durch die dann wirksame interne Abgasrückführung (EGR).
4. Frühes Auslass öffnet (AÖ) bei 2. möglich.

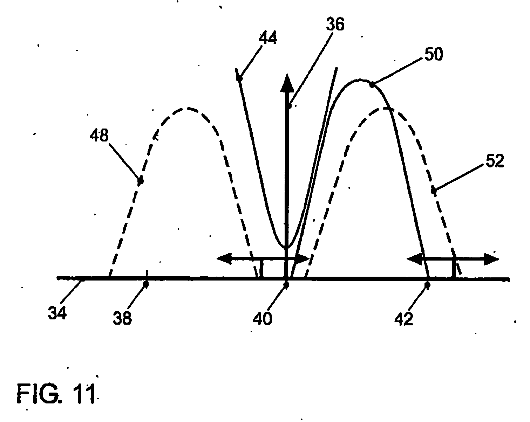

Fig. 11 veranschaulichen einen Hubverlauf der Ein- und Auslassventile für eine dritte bevorzugte Ausführungsform der erfindungsgemäßen Brennkraftmaschine. Hierbei ergibt sich bei einer Frühverstellung des Verstellers 28 bzw. der zweiten Nockenwelle 18 eine negative Ventilüberschneidung (Restgasrückhaltung), was ebenfalls einer schnellen internen EGR entspricht. Hierzu ist es vorgesehen, dass der erste Auslassnocken 22 der ersten Nockenwelle 16 durch ein zusätzliches Steuerelement pro Zylinder ergänzt oder zusammenfassend auf der Seite der ersten Nockenwelle 16 um- bzw. Abschaltbar ausgebildet ist.

Die Steuerung des Restgasgehalts erfolgt dann mittels der verstellbaren zweiten Nockenwelle 18 durch Verschiebung von Auslassschließt in Richtung früh oder spät. Bei einer Nockenumschaltung wird der erste Auslassnocken 22 durch den Umschaltvorgang mindestens auf die Geometrie und Position des variablen zweiten Auslassnockens 26 reduziert.

Fig. 11 zeigt den Zustand mit abgeschaltetem ersten Auslassnocken 22 (Hubverlauf 46 fehlt). Der Ventilhubverlauf 46 des ersten Auslassventils ist auf null abgesenkt, d.h. das erste Auslassventil bleibt geschlossen und der Auslass schließt gemäß dem Hubverlauf 48 vor dem OT 40, also vor dem vollständigen Ausschieben des Abgases aus dem Zylinder sowie vor dem Öffnen des ersten Einlassventils mit dem Hubverlauf 50 und vor dem Öffnen des zweiten Einlassventils mit dem Hubverlauf 52.

Optional wird über eine zusätzliche Abschaltung des festen ersten Einlassnockens 20 (Hubverlauf 50) ein Teil der im ersten Fall anfallenden Kompressionsverluste des Abgases zurück gewonnen. Hierdurch würde in Fig. 11 auch der Hubverlauf 50 des ersten Einlassventils verschwinden bzw. auf null reduziert, so dass sich eine noch größere negative Ventilüberschneidung ergibt.

Optimalerweise erfolgt des Schließen des zweiten Auslassventils (Hubverlauf 48) um genau den gleiche Betrag des Kurbelwinkels vor OT 40 wie das erste Öffnen eines der Einlassventile (Hubverlauf 50 oder 52) nach OT 40.

Die Fig. 6, 7, 9 und 10 betreffen allgemein eine Brennkraftmaschine mit variablem Ventiltrieb (VVT), wohingegen die Fig. 11 speziell eine Brennkraftmaschine mit Phasensteller betrifft.

## Patentansprüche

1. Brennkraftrmaschine mit wenigstens einem Arbeitszylinder, wobei jedem Arbeitszylinder wenigstens ein erstes Einlassventil und wenigstens ein zweites Einlassventil sowie wenigstens ein erstes Auslassventil und wenigstens ein zweites Auslassventil zugeordnet sind, wobei eine erste Nockenwelle (16) vorgesehen ist, welche die ersten Einlassventile und die ersten Auslassventile eines jeden Arbeitszylinders betätigt, wobei eine zweite Nockenwelle (18) vorgesehen ist, welche die zweiten Einlassventile und die zweiten Auslassventile eines jeden Arbeitszylinders betätigt, wobei an der zweiten Nockenwelle (18) ein Versteller (28) angeordnet ist, welcher Ventilsteuerzeiten der dieser zweiten Nockenwelle (18) zugeordneten Ein- und Auslassventile gegenüber den Ventilsteuerzeiten der ersten Nockenwelle (16) wahlweise nach früh oder spät verstellt, wobei jeder Nocken (20, 22, 24, 26) an seiner Umfangskontur eine Haupterhebung derart aufweist, dass das diesem Nocken zugeordnete Gaswechselventil einen Haupthub (46, 48, 50, 52) ausführt, **dadurch gekennzeichnet, dass** wenigstens ein Nocken (24, 26) der zweiten Nockenwelle (18) wenigstens eine zusätzliche Erhebung aufweist, welche derart angeordnet und ausgebildet ist, dass das diesem Nocken (24, 26) zugeordnete Gaswechselventil neben dem Haupthub (48, 52) einen zusätzlichen Hub (54, 76) vor dem Beginn und/oder am oder nach dem Ende des Haupthubes (48, 52) ausführt, wobei der zusätzliche Hub (54, 76) kleiner ist als der Haupthub (48, 52).

2. Brennkraftmaschine nach Anspruch 1, **dadurch gekennzeichnet, dass** bei wenigstens einem Nocken (24) der zweiten Nockenwelle (18), welcher ein zweites Einlassventil betätigt, die zusätzliche Erhebung derart angeordnet und ausgebildet ist, dass dieses zweite Einlassventil vor dem Beginn des Haupthubes (52) den zusätzlichen Hub (54) ausführt.

3. Brennkraftmaschine nach Anspruch 2, **dadurch gekennzeichnet, dass** der zusätzliche Hub (54) 0,5 mm bis 2 mm beträgt.

4. Brennkraftmaschlne nach wenigstens einem der Ansprüche 1 bis 3, **dadurch gekennzeichnet, dass** bei wenigstens einem Nocken (26) der zweiten Nockenwelle (18), welcher ein zweites Auslassventil betätigt, die zusätzliche Erhebung derart angeordnet und ausgebildet ist; dass dieses zweite Auslassventil am Ende des Haupthubes (48) den zusätzlichen Hub (76) ausführt, welcher sich bezogen auf den Kurbelwinkel (34) über das Ende das Haupthubes (48) hinaus erstreckt.

5. Brennkraftmaschine nach Anspruch 4, **dadurch gekennzeichnet, dass** sich der zusätzlichen Hub (76) bezogen auf den Kurbelwinkel über den Anfang des Haupthubes (52) des zweiten Einlassventiles hinaus erstreckt.

6. Brennkraftmaschine nach Anspruch 4 oder 5, **dadurch gekennzeichnet, dass** der zusätzliche Hub (76) 0,5 mm bis 2 mm beträgt.

7. Brennkraftmaschine nach wenigstens einem der vorhergehenden Ansprüche, **dadurch gekennzeichnet, dass** wenigstens ein Nocken (22) der ersten Nockenwelle (16), welcher ein erstes Auslassventil eines Arbeitszylinders betätigt, derart ausgebildet ist, dass dieser Nocken (22) wahlweise das erste Auslassventil mit dem Haupthub (46) betätigt, den Haupthub (46) dieses ersten Auslassventiles auf null absenkt oder der Verlauf des Haupthubes (46) bezogen auf den Kurbelwinkel (34) in Amplitude und Phase identisch ist mit dem Haupthub (48) des zweiten Auslassvontils dieses Arbeitszylinders.

8. Brennkraftmaschine nach Anspruch 7, **dadurch gekennzeichnet, dass** der wenigstens eine Nocken (22) der ersten Nockenwelle (16), welcher ein erstes Auslassventil eines Arbeitszylinders betätigt, zwei Nockenkonturen aufweist, wobei eine Nockenkontur derjenigen der Nocken der zweiten Nockenwelle (18) für die zweiten Auslassventile entspricht.

9. Brennkraftmaschine nach Anspruch 8, **dadurch gekennzeichnet, dass** eine Einrichtung zum Umschalten zwischen den zwei Nockenkonturen vorgesehen ist.

10. Brennkraftmaschine nach einem der vorhergehenden Ansprüche, **dadurch gekennzeichnet, dass** die Brennkraftmaschine ein Dieselmotor ist.

11. Brennkraftmaschine nach einem der vorhergehenden Ansprüche, **dadurch gekennzeichnet, dass** die Brennkraftmaschine eine Brennkraftmaschine eines Kraftfahrzeugs ist.

## Claims

1. Internal combustion engine having at least one working cylinder, each working cylinder being assigned at least one first inlet valve and at least one second inlet valve and also at least one first outlet valve and at least one second outlet valve, a first camshaft (16) being provided which actuates the first inlet valves and the first outlet valves of each working cylinder, a second camshaft (18) being provided which actuates the second inlet valves and the second outlet valves of each working cylinder, there being arranged on the second camshaft (18) an adjuster (28) which selectively adjusts the valve timing of the inlet and outlet valves assigned to said second camshaft (18) in an early or late direction in relation to the valve timing of the first camshaft (16), each cam (20, 22, 24, 26) having, on its circumferential contour, a main elevation such that the gas exchange valve assigned to said cam performs a main stroke (46, 48, 50, 52), **characterized in that** at least one cam (24, 26) of the second camshaft (18) has at least one additional elevation which is arranged and designed such that the gas exchange valve assigned to said cam (24, 26) performs not only the main stroke (48, 52) but also an additional stroke (54, 76) before the start of and/or at or after the end of the main stroke (48, 52), the additional stroke (54, 76) being smaller than the main stroke (48, 52).

2. Internal combustion engine according to Claim 1, **characterized in that**, in the case of at least one cam (24) which actuates a second inlet valve of the second camshaft (18), the additional elevation is arranged and designed such that said second inlet valve performs the additional stroke (54) before the start of the main stroke (52).

3. Internal combustion engine according to Claim 2, **characterized in that** the additional stroke (54) has a magnitude of 0.5 mm to 2 mm.

4. Internal combustion engine according to at least one of Claims 1 to 3, **characterized in that**, in the case of at least one cam (26) which actuates a second outlet valve of the second camshaft (18), the additional elevation is arranged and designed such that said second outlet valve performs the additional stroke (76) at the end of the main stroke (48), said additional stroke extending, with respect to the crank angle (34), beyond the end of the main stroke (48).

5. Internal combustion engine according to Claim 4, **characterized in that** the additional stroke (76) extends, with respect to the crank angle, beyond the start of the main stroke (52) of the second inlet valve.

6. Internal combustion engine according to Claim 4 or 5, **characterized in that** the additional stroke (76) has a magnitude of 0.5 mm to 2 mm.

7. Internal combustion engine according to at least one of the preceding claims, **characterized in that** at least one cam (22) which actuates a first outlet valve of a working cylinder of the first camshaft (16) is designed such that said cam (22) selectively actuates the first outlet valve with the main stroke (46) or reduces the main stroke (46) of said first outlet valve to zero or such that the profile of the main stroke (46) with respect to the crank angle (34) is identical in terms of amplitude and phase to the main stroke (48) of the second outlet valve of said working cylinder.

8. Internal combustion engine according to Claim 7, **characterized in that** the at least one cam (22) which actuates a first outlet valve of a working cylinder of the first camshaft (16) has two cam contours, one cam contour corresponding to that of the cam of the second camshaft (18) for the second outlet valves.

9. Internal combustion engine according to Claim 8, **characterized in that** a device for switching between the two cam contours is provided.

10. Internal combustion engine according to one of the preceding claims, **characterized in that** the internal combustion engine is a diesel engine.

11. Internal combustion engine according to one of the preceding claims, **characterized in that** the internal combustion engine is an internal combustion engine of a motor vehicle.

## Revendications

1. Moteur à combustion interne comprenant au moins un cylindre de travail, au moins une première soupape d'admission et au moins une deuxième soupape d'admission ainsi qu'au moins une première soupape d'échappement et au moins une deuxième soupape d'échappement étant associées à chaque cylindre de travail, un premier arbre à cames (16) étant prévu, lequel actionne les premières soupapes d'admission et les premières soupapes d'échappement de chaque cylindre de travail, un deuxième arbre à cames (18) étant prévu, lequel actionne les deuxièmes soupapes d'admission et les deuxièmes soupapes d'échappement de chaque cylindre de travail, un dispositif de réglage (28) étant disposé sur le deuxième arbre à cames (18), lequel dispositif de réglage règle de manière sélective en avance ou en retard les temps de commande de soupape des soupapes d'admission et d'échappement associées à ce deuxième arbre à cames (18) par rapport aux temps de commande de soupape du premier arbre à cames (16), chaque came (20, 22, 24, 26) comprenant sur son contour périphérique un bossage principal de telle sorte que la soupape d'échange de gaz associée à cette came effectue une course principale (46, 48, 50, 52), **caractérisé en ce qu'**au moins une came (24, 26) du deuxième arbre à cames (18) comprend au moins un bossage supplémentaire qui est disposé et réalisé de telle sorte que la soupape d'échange de gaz associée à cette came (24, 26) effectue, en plus de la course principale (48, 52), une course supplémentaire (54, 76) avant le début et/ou à ou après la fin de la course principale (48, 52), la course supplémentaire (54, 76) étant plus petite que la course principale (48, 52).

2. Moteur à combustion interne selon la revendication 1, **caractérisé en ce qu'**en cas d'au moins une came (24) du deuxième arbre à cames (18) qui actionne une deuxième soupape d'admission, le bossage supplémentaire est disposé et réalisé de telle sorte que cette deuxième soupape d'admission effectue la course supplémentaire (54) avant le début de la course principale (52).

3. Moteur à combustion interne selon la revendication 2, **caractérisé en ce que** la course supplémentaire (54) vaut de 0,5 mm à 2 mm.

4. Moteur à combustion interne selon au moins l'une quelconque des revendications 1 à 3, **caractérisé en ce, qu'**en cas d'au moins une came (26) du deuxième arbre à cames (18) qui actionne une deuxième soupape d'échappement, le bossage supplémentaire est disposé et réalisé de telle sorte que cette deuxième soupape d'échappement effectue la course supplémentaire (76) à la fin de la course principale (48), laquelle course supplémentaire s'étend au-delà de la fin de la course principale (48) par rapport à l'angle de vilebrequin (34).

5. Moteur à combustion interne selon la revendication 4, **caractérisé en ce que** la course supplémentaire (76) s'étend au-delà du commencement de la course principale (52) de la deuxième soupape d'admission par rapport à l'angle de vilebrequin.

6. Moteur à combustion interne selon la revendication 4 ou 5, **caractérisé en ce que** la course supplémentaire (76) vaut de 0,5 mm à 2 mm.

7. Moteur à combustion interne selon au moins l'une quelconque des revendications précédentes, **caractérisé en ce qu'**au moins une came (22) du premier arbre à cames (16) qui actionne une première soupape d'échappement d'un cylindre de travail est réalisée de telle sorte que cette came (22) actionne de manière sélective la première soupape d'échappement avec la course principale (46), la course principale (46) de cette première soupape d'échappement s'abaisse jusqu'à zéro ou la variation de la course principale (46) par rapport à l'angle de vilebrequin (34) est identique en amplitude et en phase à la course principale (48) de la deuxième soupape d'échappement de ce cylindre de travail.

8. Moteur à combustion interne selon la revendication 7, **caractérisé en ce que** l'au moins une came (22) du premier arbre à cames (16) qui actionne une première soupape d'échappement d'un cylindre de travail comprend deux contours de came, un contour de came correspondant à ceux des cames du deuxième arbre à cames (18) pour les deuxièmes soupapes d'échappement.

9. Moteur à combustion interne selon la revendication 8, **caractérisé en ce qu'**un dispositif est prévu pour commuter entre les deux contours de came.

10. Moteur à combustion interne selon l'une quelconque des revendications précédentes, **caractérisé en ce que** le moteur à combustion interne est un moteur Diesel.

11. Moteur à combustion interne selon l'une quelconque des revendications précédentes, **caractérisé en ce que** le moteur à combustion interne est un moteur à combustion interne d'un véhicule automobile.
